# EUROPEAN PATENT APPLICATION

(11) **EP 3 148 232 A1**
(43) Date of publication of application: **29.03.2017**
(21) Application number: 14896734.2
(22) Date of filing: 06.06.2014
(51) Int. Cl.: H04W 8/02

(54) **METHOD, DEVICE AND SYSTEM FOR CONTROLLING TOTAL QUANTITY OF ONLINE ATTACHED USERS**

(71) Applicant: Huawei Technologies Co. Ltd., Shenzhen, Guangdong 518129 (CN)
(72) Inventor: CAO, Longyu, Shenzhen Guangdong 518129 (CN); ZHANG, Yanping, Shenzhen Guangdong 518129 (CN)
(74) Representative: Maiwald Patentanwalts GmbH
(86) International application number: PCT/CN2014/079387
(87) International publication number: WO 2016/000095

(57) **Abstract**

The present invention provides a method, a device, and a system for controlling a total quantity of online attached users. The method includes: receiving, by a total user quantity control device, an authorization request sent by a network side device, where the authorization request includes at least identification information of first UE and identification information of a first MVNO; determining, by the total user quantity control device according to the identification information of the first MVNO and the identification information of the first UE, whether online attached users of the first MVNO includes the first UE; when the online attached users of the first MVNO does not include the first UE, and a total quantity of online attached users of the first MVNO is less than a threshold, increasing, by the total user quantity control device, the total quantity of online attached users of the first MVNO, and adding the first UE to the online attached users of the first MVNO; and feeding back, by the total user quantity control device, authorization success information to the network side device. According to the method, a quantity of online attached users of an MVNO is prevented from exceeding a total user quantity set by an MNO.

## Description

### TECHNICAL FIELD

The present invention relates to the field of communications technologies, and in particular, to a method, a device, and a system for controlling a total quantity of online attached users of a mobile virtual network operator (Mobile Virtual Network Operator, MVNO).

### BACKGROUND

An MVNO is a service industry divided from the telecommunications industry in a telecommunications market opening process. The MVNO generally refers to operators who develop their own users and provide services for the users by using an existing network of a basic mobile operator (Mobile Network Operator, MNO) and by leasing a network device of the MNO, because they have no mobile operation license or their development scale is limited.

With introduction of the MVNO, a network of one MNO may serve multiple MVNOs, and the MNO needs to control and manage the MVNOs. When the MNO signs a cooperation agreement with the MVNO, the MNO clearly stipulates a user quantity of the MVNO, so as to prevent the MVNO from excessively developing users, which causes excessive occupation of network resources of the MNO, and to avoid network device congestion. However, in the prior art, there is still no related technology to support the MNO in effectively controlling a total quantity of online attached users of the MVNO.

### SUMMARY

Embodiments of the present invention provide a method, a device, and a system for controlling a total quantity of online attached users, so that an MNO can effectively control a total quantity of online attached users of an MVNO.

To resolve the foregoing technical problem, the embodiments of the present invention disclose the following technical solutions:

According to a first aspect, a method for controlling a total quantity of online attached users is provided, where the method includes:
receiving, by a total user quantity control device, an authorization request sent by a network side device, where the authorization request includes at least identification information of first user equipment UE and identification information of a first virtual network operator MVNO;
determining, by the total user quantity control device according to the identification information of the first MVNO and the identification information of the first UE, whether online attached users of the first MVNO includes the first UE;
when the online attached users of the first MVNO does not include the first UE, and a total quantity of online attached users of the first MVNO is less than a threshold, increasing, by the total user quantity control device, the total quantity of online attached users of the first MVNO, and adding the first UE to the online attached users of the first MVNO; and
feeding back, by the total user quantity control device, authorization success information to the network side device.

With reference to the foregoing first aspect, in a first possible implementation manner, the method further includes:
when the online attached users of the first MVNO does not include the first UE, and the total quantity of online attached users of the first MVNO exceeds the threshold, feeding back, by the total user quantity control device, authorization failure information to the network side device.

According to a second aspect, a method for controlling a total quantity of online attached users is provided, where the method includes:
receiving, by a total user quantity control device, an authorization request sent by a network side device, where the authorization request includes at least identification information of first user equipment UE and identification information of a first virtual network operator MVNO;
determining, by the total user quantity control device according to the identification information of the first MVNO and the identification information of the first UE, whether online attached users of the first MVNO includes the first UE;
when the online attached users of the first MVNO does not include the first UE, increasing, by the total user quantity control device, a total quantity of online attached users of the first MVNO;
when an increased total quantity of online attached users of the first MVNO is less than or equal to a threshold, adding, by the total user quantity control device, the first UE to the online attached users of the first MVNO; and
feeding back, by the total user quantity control device, authorization success information to the network side device.

With reference to the foregoing second aspect, in a first possible implementation manner, the method further includes: when the online attached users of the first MVNO does not include the first UE, and the increased total quantity of online attached users of the first MVNO exceeds the threshold, feeding back, by the total user quantity control device, authorization failure information to the network side device.

According to a third aspect, a method for controlling a total quantity of online attached users is provided, where the method includes:
receiving, by a total user quantity control device, an update request sent by a network side device, where the update request includes at least identification information of first UE and identification information of a first MVNO;
decreasing, by the total user quantity control device, a total quantity of online attached users of the first MVNO according to the identification information of the first MVNO in the update request, and deleting the first UE from online attached users of the first MVNO according to the identification information of the first UE; and
feeding back, by the total user quantity control device, update request acknowledgment information to the network side device.

According to a fourth aspect, a method for controlling a total quantity of online attached users is provided, where the method includes:
receiving, by a network side device, an attach request of first UE or a tracking area update request of first UE;
determining, by the network side device, a first MVNO corresponding to the first UE; and
sending, by the network side device, an authorization request to a total user quantity control device, where the authorization request includes at least identification information of the first UE and identification information of the first MVNO, so that the total user quantity control device controls a total user quantity according to the identification information of the first MVNO and the identification information of the first UE.

With reference to the foregoing fourth aspect, in a first possible implementation manner, the determining, by the network side device, a first MVNO corresponding to the first UE includes:
searching, by the network side device, a correspondence between UE identification information and MVNO identification information, to determine the identification information of the first MVNO corresponding to the identification information of the first UE.

According to a fifth aspect, a method for controlling a total quantity of online attached users is provided, where the method includes:
learning, by a network side device, a detach request of first UE;
determining, by the network side device, a first MVNO corresponding to the first UE; and
sending, by the network side device, an update request to a total user quantity control device, where the update request includes at least identification information of the first UE and identification information of the first MVNO, so that the total user quantity control device decreases a total quantity of online attached users of the first MVNO according to the identification information of the first MVNO, and deletes the first UE from online attached users of the first MVNO according to the identification information of the first UE; and feeds back update request acknowledgment information to the network side device.

With reference to the foregoing fifth aspect, in a first possible implementation manner, the learning, by a network side device, a detach request of first UE includes:
receiving, by the network side device, the detach request sent by the first UE; or
receiving, by the network side device, the detach request of the first UE sent by an MVNO home subscriber server HSS; or
initiating, by the network side device, the detach request of the first UE.

With reference to the foregoing fifth aspect or the first possible implementation manner of the fifth aspect, in a second possible implementation manner, the determining, by the network side device, a first MVNO corresponding to the first UE includes:
searching, by the network side device, a correspondence between UE identification information and MVNO identification information, to determine the identification information of the first MVNO corresponding to the identification information of the first UE.

According to a sixth aspect, a total user quantity control device is provided, where the device includes:
an authorization request receiving unit, configured to receive an authorization request sent by a network side device, where the authorization request includes at least identification information of first UE and identification information of a first MVNO;
a determining unit, configured to determine, according to the identification information of the first MVNO and the identification information of the first UE, whether online attached users of the first MVNO includes the first UE; and determine whether a total quantity of online attached users of the first MVNO is less than a threshold;
a total user quantity control unit, configured to: when the determining unit determines that the online attached users of the first MVNO does not include the first UE, and the total quantity of online attached users of the first MVNO is less than the threshold, increase the total quantity of online attached users of the first MVNO, and add the first UE to the online attached users of the first MVNO; and
an authorization response sending unit, configured to: when the determining unit determines that the online attached users of the first MVNO does not include the first UE, and the total quantity of online attached users of the first MVNO is less than the threshold, feed back authorization success information to the network side device.

With reference to the foregoing fifth aspect, in a first possible implementation manner, the authorization response sending unit is further configured to: when the determining unit determines that the online attached users of the first MVNO does not include the first UE, and the total quantity of online attached users of the first MVNO exceeds the threshold, feed back authorization failure information to the network side device.

According to a sixth aspect, a total user quantity control device is provided, where the device includes:
an authorization request receiving unit, configured to receive an authorization request sent by a network side device, where the authorization request includes at least identification information of first UE and identification information of a first MVNO;
a first determining unit, configured to determine, according to the identification information of the first MVNO and the identification information of the first UE, whether online attached users of the first MVNO includes the first UE;
a total user quantity control unit, configured to: when the first determining unit determines that the online attached users of the first MVNO does not include the first UE, increase a total quantity of online attached users of the first MVNO, and add the first UE to the online attached users of the first MVNO;
a second determining unit, configured to determine whether a total quantity, of online attached users of the first MVNO, increased by the first user management unit is less than or equal to a threshold; and
an authorization response sending unit, configured to: when the second determining unit determines that the increased total quantity of online attached users of the first MVNO is less than or equal to the threshold, feed back authorization success information to the network side device.

With reference to the foregoing sixth aspect, in a first possible implementation manner, the authorization response sending unit is further configured to: when the second determining unit determines that the total quantity of online attached users of the first MVNO exceeds the threshold, feed back authorization failure information to the network side device.

According to a seventh aspect, a total user quantity control device is provided, where the device includes:
an update request receiving unit, configured to receive an update request sent by a network side device, where the update request includes at least identification information of the first UE and identification information of a first MVNO;
a total user quantity control unit, configured to decrease a total quantity of online attached users of the first MVNO according to the identification information of the first MVNO in the update request, and delete the first UE from online attached users of the first MVNO according to the identification information of the first UE; and
an update response sending unit, configured to feed back the update request acknowledgment information to the network side device.

According to an eighth aspect, a network side device is provided, where the device includes:
a request receiving unit, configured to receive an attach request of first UE or a tracking area update request of first UE;
an information determining unit, configured to determine a first MVNO corresponding to the first UE; and
an information sending unit, configured to send an authorization request to a total user quantity control device, where the authorization request includes at least identification information of the first UE and identification information of the first MVNO, so that the total user quantity control device controls a total user quantity according to the identification information of the first MVNO and the identification information of the first UE.

With reference to the foregoing eighth aspect, in a first possible implementation manner, the information determining unit is specifically configured to search a correspondence between UE identification information and MVNO identification information, to determine the identification information of the first MVNO corresponding to the identification information of the first UE.

According to a ninth aspect, a network side device is provided, where the device includes:
a request learning unit, configured to learn a detach request of first UE;
an information determining unit, configured to determine a first MVNO corresponding to the first UE; and
an information sending unit, configured to send an update request to a total user quantity control device, where the update request includes at least identification information of the first UE and identification information of the first MVNO, so that the total user quantity control device decreases a total quantity of online attached users of the first MVNO according to the identification information of the first MVNO, and deletes the first UE from online attached users of the first MVNO according to the identification information of the first UE; and feeds back update request acknowledgment information to the network side device.

With reference to the foregoing ninth aspect, in a first possible implementation manner, the request learning unit is specifically configured to receive the detach request sent by the first UE; or receive the detach request of the first UE sent by an MVNO HSS; or initiate the detach request of the first UE.

With reference to the foregoing ninth aspect, and/or the first possible implementation manner, in a second possible implementation manner,
the information determining unit is specifically configured to search a correspondence between UE identification information and MVNO identification information, to determine the identification information of the first MVNO corresponding to the identification information of the first UE.

According to a tenth aspect, a system for controlling a total quantity of online attached users is provided, including a network side device and a total user quantity control device, where
the network side device is configured to receive an attach request of first UE or a tracking area update request of first UE; determine a first MVNO corresponding to the first UE; and send an authorization request to the total user quantity control device, where the authorization request includes at least identification information of the first UE and identification information of the first MVNO; and
the total user quantity control device is configured to receive the authorization request sent by the network side device; determine, according to the identification information of the first MVNO and the identification information of the first UE, whether online attached users of the first MVNO includes the first UE; when the online attached users of the first MVNO does not include the first UE, increase a total quantity of online attached users of the first MVNO, and add the first UE to the online attached users of the first MVNO; and when an increased total quantity of online attached users of the first MVNO is less than or equal to a threshold, feed back authorization success information to the network side device; or
configured to receive the authorization request sent by the network side device; determine, according to the identification information of the first MVNO and the identification information of the first UE, whether online attached users of the first MVNO includes the first UE; determine whether a total quantity of online attached users of the first MVNO is less than a threshold; and when the online attached users of the first MVNO does not include the first UE, and the total quantity of online attached users of the first MVNO is less than the threshold, increase the total quantity of online attached users of the first MVNO, add the first UE to the online attached users of the first MVNO, and feed back authorization success information to the network side device.

According to an eleventh aspect, a system for controlling a total quantity of online attached users is provided, including a network side device and a total user quantity control device, where
the network side device is configured to learn a detach request of first UE; determine a first MVNO corresponding to the first UE; and send an update request to the total user quantity control device, where the update request includes at least identification information of the first UE and identification information of the first MVNO; and
the total user quantity control device is configured to receive the update request sent by the network side device; decrease a total quantity of online attached users of the first MVNO according to the identification information of the first MVNO in the update request, and delete the first UE from online attached users of the first MVNO according to the identification information of the first UE; and feed back update request acknowledgment information to the network side device.

In the embodiments of the present invention, a total user quantity control device controls a quantity of online attached users of an MVNO, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1 is a flowchart of a method for controlling a total quantity of online attached users according to an embodiment of the present invention;
FIG. 1A is a schematic diagram of a network architecture according to an embodiment of the present invention;
FIG. 1B is a schematic diagram of a network architecture according to an embodiment of the present invention;
FIG. 2 is another flowchart of a method for controlling a total quantity of online attached users according to an embodiment of the present invention;
FIG. 3 is another flowchart of a method for controlling a total quantity of online attached users according to an embodiment of the present invention;
FIG. 4 is another flowchart of a method for controlling a total quantity of online attached users according to an embodiment of the present invention;
FIG. 5 is another flowchart of a method for controlling a total quantity of online attached users according to an embodiment of the present invention;
FIG. 6 is a flowchart of a method for controlling a total quantity of online attached users in an Attach procedure according to an embodiment of the present invention;
FIG. 7 is a flowchart of a method for controlling a total quantity of online attached users in an Inter-PLMN TAU procedure according to an embodiment of the present invention;
FIG. 8 is a flowchart of a method for controlling a total quantity of online attached users in a Detach procedure according to an embodiment of the present invention;
FIG. 9 is a schematic structural diagram of a total user quantity control device according to an embodiment of the present invention;
Referring to FIG. 9A, FIG. 9A is another schematic structural diagram of a total user quantity control device according to an embodiment of the present invention;
FIG. 10 is another schematic structural diagram of a total user quantity control device according to an embodiment of the present invention;
FIG. 11 is another schematic structural diagram of a network side device according to an embodiment of the present invention;
FIG. 12 is another schematic structural diagram of a network side device according to an embodiment of the present invention; and
FIG. 13 is another schematic structural diagram of a system for controlling a total quantity of online attached users according to an embodiment of the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

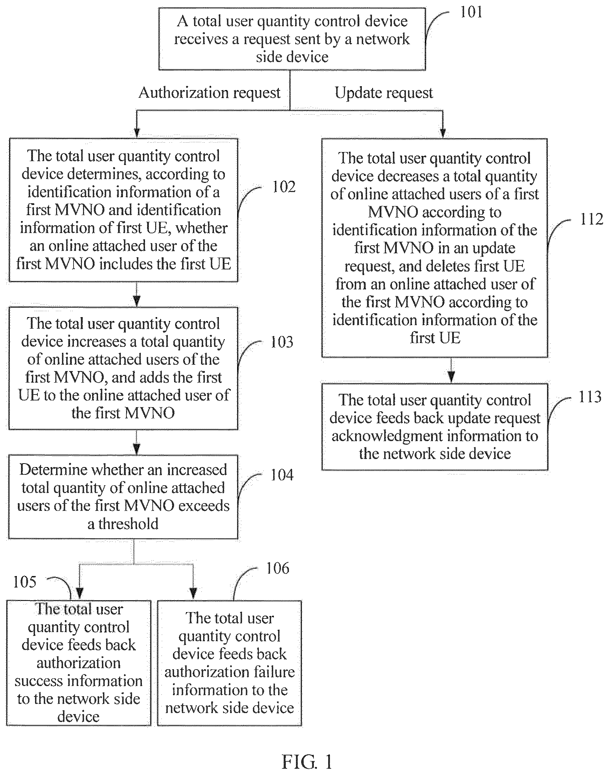

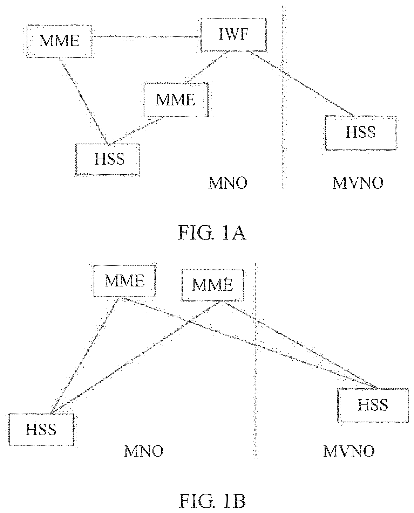

Referring to FIG. 1, FIG. 1 is a flowchart of a method for controlling a total quantity of online attached users according to an embodiment of the present invention. The method includes:
Step 101: A total user quantity control device receives a request sent by a network side device.

After the network side device receives an attach request of first UE or a tracking area update request of first UE, or after the network side device learns a detach request of first UE, the network side device determines a first MVNO corresponding to the first UE.

If the network side device receives the attach request of the first UE or the tracking area update request of the first UE, the network side device sends an authorization request to the total user quantity control device, and the authorization request includes at least identification information of the first UE and identification information of the first MVNO. If the network side device learns the detach request of the first UE, the network side device sends an update request to the total user quantity control device, and the update request includes at least identification information of the first UE and identification information of the first MVNO.

Steps 102 to 106 are performed if the request received by the total user quantity control device is the authorization request, and steps 112 and 113 are performed if the received request is the update request.

The authorization request is a request for determining whether a total quantity of online attached users, of an MVNO to which UE belongs, exceeds a threshold. The update request is used to update a total quantity of online attached users of an MVNO to which UE belongs.

Step 102: The total user quantity control device determines, according to identification information of a first MVNO and identification information of first UE, whether online attached users of the first MVNO includes the first UE.

The total user quantity control device first finds the corresponding first MVNO according to the identification information of the first MVNO, and then checks identification information of all online attached users of the first MVNO to confirm whether the identification information of the online attached users includes the identification information of the first UE. If the identification information of the first UE is included, it indicates that the first UE is online attached users of the first MVNO, and in this case, the total user quantity control device is not to increase a total quantity of online attached users of the first MVNO; or if the identification information of the first UE is not included, it indicates that the online attached users of the first MVNO does not include the first UE, and in this case, the total user quantity control device performs step 103.

Step 103: The total user quantity control device increases a total quantity of online attached users of the first MVNO, and adds the first UE to the online attached users of the first MVNO.

The total user quantity control device may increase the total quantity of online attached users of the first MVNO by one, and add the first UE to the online attached users of the first MVNO; and specifically, may add the identification information of the first UE to identification information of the online attached users of the first MVNO.

After the total quantity of online attached users of the first MVNO is increased, step 104 is further performed.

Step 104: Determine whether an increased total quantity of online attached users of the first MVNO exceeds a threshold.

The total user quantity control device determines whether the increased total quantity of online attached users of the first MVNO exceeds the threshold, where the threshold is a total user quantity negotiated by the first MVNO and an MNO.

If the threshold is not exceeded, the total user quantity control device performs step 105, or if the threshold is exceeded, performs step 106.

Step 105: The total user quantity control device feeds back authorization success information to the network side device.

Then, the network side device can execute a corresponding UE attach procedure or a corresponding UE tracking area update procedure.

Step 106: The total user quantity control device feeds back authorization failure information to the network side device.

The authorization failure information may further include a field of an authorization failure cause, and the field may be specifically set to "a user quantity reaches an upper limit", or the like.

Step 112 is performed if the request sent by the network side device and received by the total user quantity control device is the update request.

Step 112: The total user quantity control device decreases a total quantity of online attached users of a first MVNO according to identification information of the first MVNO in an update request, and deletes first UE from online attached users of the first MVNO according to identification information of the first UE.

If the total user quantity control device receives the update request, it indicates that the first UE is online attached users of the first MVNO. The total user quantity control device finds the corresponding first MVNO according to the identification information of the first MVNO, decreases the total quantity of online attached users of the first MVNO by one, and deletes the identification information of the first UE from identification information of the online attached users of the first MVNO.

Step 113: The total user quantity control device feeds back update request acknowledgment information to the network side device.

Then, the network side device can execute a related detach procedure of the first UE.

In this embodiment, the network side device may be an MME or the like. The total user quantity control device may be a new logical network element IWF (Interworking Function, interworking function) deployed on a network by the MNO, the IWF controls total quantity authorization of a total quantity of online attached users of an MVNO according to an operator configuration policy, and a network architecture thereof is shown in FIG. 1A; or the total user quantity control device may be an MNO HSS that directly controls a total quantity of online attached users of an MVNO according to an operator configuration policy, and a network architecture thereof is shown in FIG. 1B. Although the two different solutions correspond to different network structures, the IWF and the MNO HSS implement a same function of controlling the total quantity of online attached users of the MVNO.

In this embodiment of the present invention, a total user quantity control device controls a quantity of online attached users of an MVNO, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

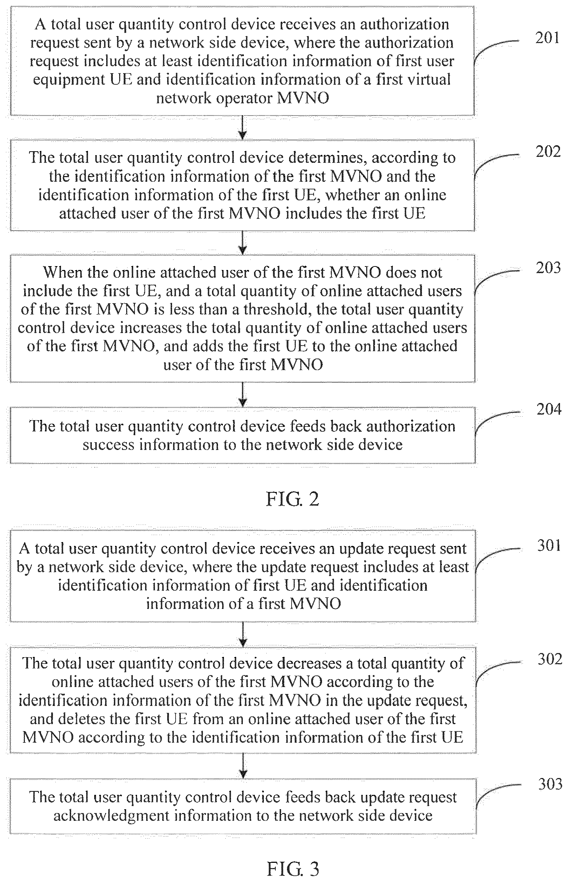

Referring to FIG. 2, FIG. 2 is another flowchart of a method for controlling a total quantity of online attached users according to an embodiment of the present invention. The method includes:
Step 201: A total user quantity control device receives an authorization request sent by a network side device, where the authorization request includes at least identification information of first user equipment UE and identification information of a first virtual network operator MVNO.

In this embodiment, the authorization request may further include another parameter, which is not limited in this embodiment.

The authorization request is a request for determining whether a total quantity of online attached users, of an MVNO to which UE belongs, exceeds a threshold.

Step 202: The total user quantity control device determines, according to the identification information of the first MVNO and the identification information of the first UE, whether online attached users of the first MVNO includes the first UE.

Step 203: When the online attached users of the first MVNO does not include the first UE, and a total quantity of online attached users of the first MVNO is less than a threshold, the total user quantity control device increases the total quantity of online attached users of the first MVNO, and adds the first UE to the online attached users of the first MVNO.

Step 204: The total user quantity control device feeds back authorization success information to the network side device.

Optionally, in another embodiment, based on the foregoing embodiment, in this embodiment, the method may further include: when the online attached users of the first MVNO does not include the first UE, and the total quantity of online attached users of the first MVNO exceeds the threshold, the total user quantity control device feeds back authorization failure information to the network side device.

In this embodiment of the present invention, a total user quantity control device controls a quantity of online attached users of an MVNO, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

Referring to FIG. 3, FIG. 3 is another flowchart of a method for controlling a total quantity of online attached users according to an embodiment of the present invention. The method includes:
Step 301: A total user quantity control device receives an update request sent by a network side device, where the update request includes at least identification information of first UE and identification information of a first MVNO.

The update request is used to update a total quantity of online attached users of an MVNO to which UE belongs.

Step 302: The total user quantity control device decreases a total quantity of online attached users of the first MVNO according to the identification information of the first MVNO in the update request, and deletes the first UE from online attached users of the first MVNO according to the identification information of the first UE.

Step 303: The total user quantity control device feeds back update request acknowledgment information to the network side device.

Optionally, in another embodiment, based on the foregoing embodiment, in this embodiment, the method may further include: when the online attached users of the first MVNO does not include the first UE, and the total quantity of online attached users of the first MVNO exceeds the threshold, the total user quantity control device feeds back authorization failure information to the network side device.

In this embodiment of the present invention, a total user quantity control device controls a quantity of online attached users of an MVNO, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

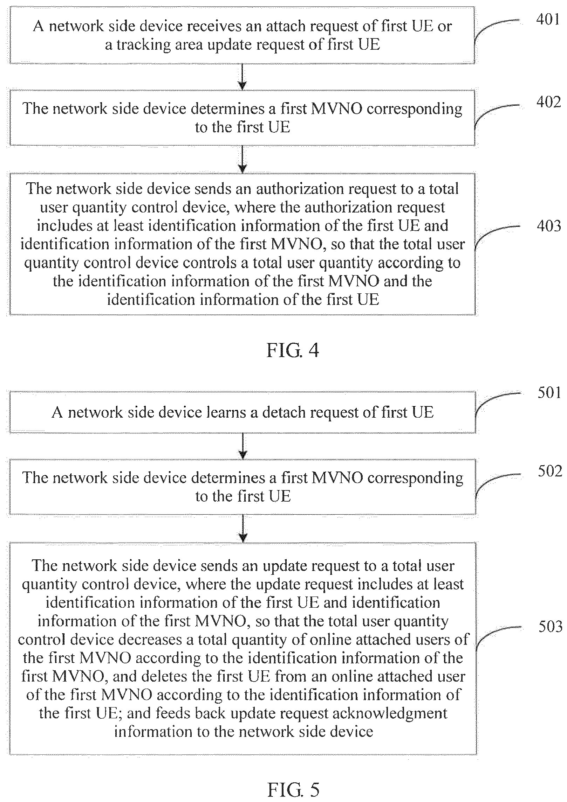

Referring to FIG. 4, FIG. 4 is another flowchart of a method for controlling a total quantity of online attached users according to an embodiment of the present invention.

In this embodiment, a network side device is used as an execution body for description. The method may include:
Step 401: The network side device receives an attach request of first UE or a tracking area update request of first UE.

Step 402: The network side device determines a first MVNO corresponding to the first UE.

The network side device may obtain identification information of the first UE in the attach request or the tracking area update request, and then obtain, according to a correspondence that is between UE identification information and MVNO identification information and preset in the network side device, identification information of the first MVNO corresponding to the identification information of the first UE, that is, obtain the first MVNO corresponding to the first UE. There are multiple methods for obtaining the first MVNO corresponding to the first UE by the network side device, and the foregoing manner is only an example.

Step 403: The network side device sends an authorization request to a total user quantity control device, where the authorization request includes at least identification information of the first UE and identification information of the first MVNO, so that the total user quantity control device controls a total user quantity according to the identification information of the first MVNO and the identification information of the first UE.

In an embodiment, after receiving the authorization request, according to the identification information of the first MVNO and the identification information of the first UE, if an online attached users of the first MVNO does not include the first UE, the total user quantity control device increases a total quantity of online attached users of the first MVNO, and adds the first UE to the online attached users of the first MVNO; and when an increased total quantity of online attached users of the first MVNO is less than or equal to a threshold, the total user quantity control device feeds back authorization success information to the network side device, where the threshold is a total user quantity negotiated by the first MVNO and an MNO.

In another embodiment, after receiving the authorization request, the total user quantity control device determines, according to the identification information of the first MVNO and the identification information of the first UE, whether online attached users of the first MVNO includes the first UE. If the online attached users of the first MVNO does not include the first UE, and a total quantity of online attached users of the first MVNO is less than a threshold, the total user quantity control device increases the total quantity of online attached users of the first MVNO, adds the first UE to the online attached users of the first MVNO, and feeds back authorization success information to the network side device.

For the foregoing execution procedure of the total user quantity control device, refer to the foregoing method embodiment; details are not described herein.

In this embodiment of the present invention, a network side device sends, to a total user quantity control device, identification information of UE and identification information of an MVNO corresponding to the UE, so that the total user quantity control device can control a quantity of online attached users of the MVNO; and an MNO can accurately count the quantity of online attached users of the MVNO in time, and effectively control the total quantity of online attached users of the MVNO, so as to prevent the quantity of online attached users of the MVNO from exceeding a total user quantity set by the MNO.

Referring to FIG. 5, FIG. 5 is another flowchart of a method for controlling a total quantity of online attached users according to an embodiment of the present invention.

In this embodiment, a network side device is still used as an execution body for description. The method may include:
Step 501: The network side device learns a detach request of first UE.

A process that the network side device learns the detach request of the first UE may be specifically as follows: The network side device receives the detach request sent by the first UE; or the network side device receives the detach request of the first UE sent by an MVNO HSS; or the network side device initiates the detach request of the first UE.

Step 502: The network side device determines a first MVNO corresponding to the first UE.

This determining process is similar to the foregoing step 402; details are not described herein.

Step 503: The network side device sends an update request to a total user quantity control device, where the update request includes at least identification information of the first UE and identification information of the first MVNO, so that the total user quantity control device decreases a total quantity of online attached users of the first MVNO according to the identification information of the first MVNO, and deletes the first UE from online attached users of the first MVNO according to the identification information of the first UE; and feeds back update request acknowledgment information to the network side device.

After receiving the update request, the total user quantity control device decreases the total quantity of online attached users of the first MVNO according to the identification information of the first MVNO, and deletes the first UE from the online attached users of the first MVNO according to the identification information of the first UE; and feeds back the update request acknowledgment information to the network side device.

For the foregoing execution procedure of the total user quantity control device, refer to the foregoing method embodiment; details are not described herein.

In this embodiment of the present invention, a network side device sends, to a total user quantity control device, identification information of UE and identification information of an MVNO corresponding to the UE, so that the total user quantity control device can control a quantity of online attached users of the MVNO; and an MNO can accurately count the quantity of online attached users of the MVNO in time, and effectively control the total quantity of online attached users of the MVNO, so as to prevent the quantity of online attached users of the MVNO from exceeding a total user quantity set by the MNO.

The foregoing method for controlling a total quantity of online attached users is described in the following separately by using an Attach procedure, an Inter-PLMN TAU procedure, and a Detach procedure as examples.

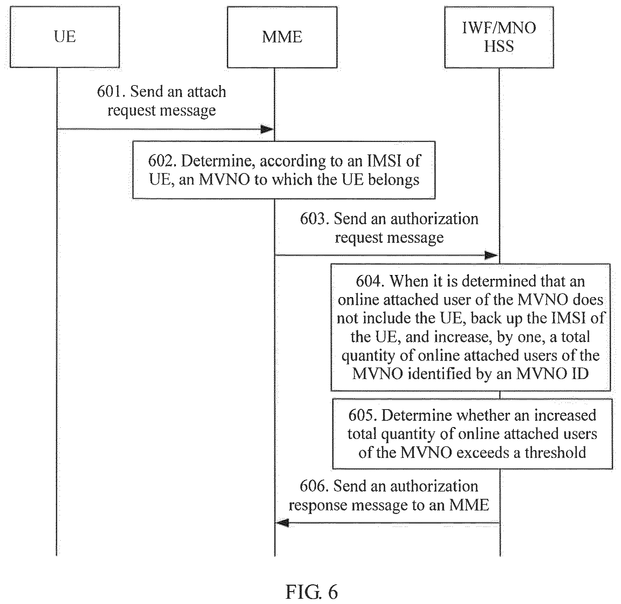

Referring to FIG. 6, FIG. 6 is a flowchart of a method for controlling a total quantity of online attached users in an Attach procedure according to an embodiment of the present invention.

The method may include:
Step 601: UE sends an attach request message to an MME.

The MME performs authentication on the UE. If authentication fails, the MME refuses an attach request of the UE. The UE may enable a timer, and initiate an attach request again to the MME after the timer times out; or after the attach request is refused, the UE may initiate an attach request to another MVNO network. After the MME has authenticated the UE, and if the MME changes after a previous detach of the UE or if the MME has no subscription data information of the UE, the MME sends a location update request message to an MVNO HSS, where the MME adds identification information of the UE to the message, for example, IMSI information, and the IMSI information of the UE may be included in the attach request message sent by the UE.

The MVNO HSS acknowledges the location update request of the MME, sends a location update acknowledgment message to the MME, and sends the subscription data information of the UE to the MME; and after receiving the location update acknowledgment message of the UE, the MME performs step 602.

Step 602: The MME determines, according to an IMSI of the UE, an MVNO to which the UE belongs.

A mapping table between an IMSI of UE and identification information of an MVNO (for example, an MVNO ID) may be pre-stored in the MME. The MME determines, according to the IMSI of the UE and by searching the mapping table, the MVNO to which the UE belongs. The MVNO ID may be a new information element, or may be an existing identity that can identify an MVNO network to which the UE belongs, for example, a PLMN ID.

Step 603: The MME sends an authorization request message to an IWF/MNO HSS, and sends identification information of the MVNO corresponding to the UE and the IMSI of the UE to the IWF/MNO HSS.

The MME sends the MVNO ID and the IMSI of the UE to the IWF/MNO HSS, and requests total quantity authorization of online attached users of an MVNO.

Step 604: When determining that online attached users of the MVNO does not include the UE, the IWF/MNO HSS backs up the IMSI of the UE, and increases, by one, a total quantity of online attached users of the MVNO identified by an MVNO ID.

After the IWF/MNO HSS receives the authorization request message of the MME, the IWF/MNO HSS searches whether the IMSI of the UE exists in an IMSI of online attached users corresponding to the MVNO ID. If the IMSI of the UE exists, it indicates that the UE is online attached users of the MVNO, and in this case, step 606 is performed directly; or if the IMSI of the UE does not exist, the IWF/MNO HSS backs up the IMSI of the UE, increases, by one, the total quantity of online attached users of the MVNO identified by the MVNO ID, and then performs step 605.

Step 605: The IWF/MNO HSS determines whether an increased total quantity of online attached users of the MVNO exceeds a threshold.

The threshold is a total user quantity negotiated by the MVNO and an MNO.

Step 606: The IWF/MNO HSS sends an authorization response message to the MME.

If the threshold is not exceeded, the IWF/MNO HSS feeds back the MME an authorization response message indicating an authorization success, where the message may include an IMSI of authorized UE. After receiving the message, the MME may execute another attach procedure.

If the threshold is exceeded, total quantity authorization performed by the IWF/MNO HSS fails, and the IWF/MNO HSS sends the MME an authorization response message indicating an authorization failure. The response message may include an IMSI of UE failing to be authorized, and may further include a field of a failure cause, where a cause value is set to "a user quantity reaches an upper limit".

Certainly, in this embodiment, it may be first determined whether the online attached users of the first MVNO includes the first UE. If the first UE is not included, it is determined whether the total quantity of online attached users of the first MVNO is less than the threshold. If the total quantity of online attached users of the first MVNO is less than the threshold, the total user quantity control device increases the total quantity of online attached users of the first MVNO, and adds the first UE to the online attached users of the first MVNO.

In this embodiment of the present invention, it is implemented that a quantity of online attached users of an MVNO is controlled in an attach procedure, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

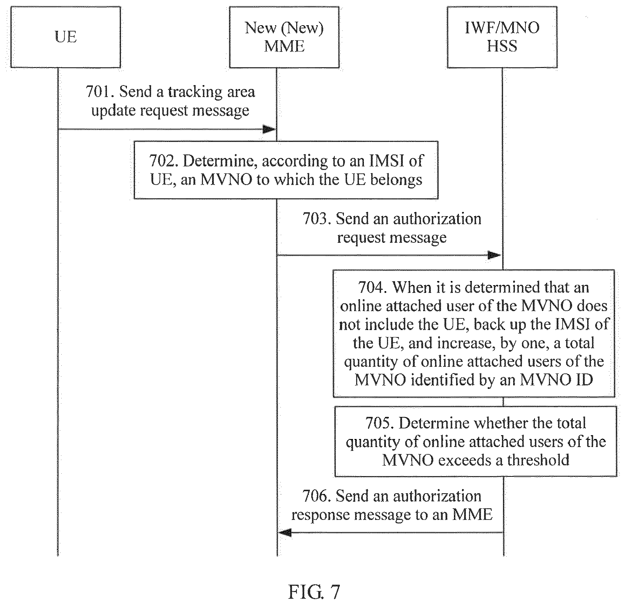

Referring to FIG. 7, FIG. 7 is a flowchart of a method for controlling a total quantity of online attached users in an Inter-PLMN TAU procedure according to an embodiment of the present invention.

The method may include:
Step 701: UE sends a tracking area update request message to a new (new) MME.

The tracking area update request message includes IMSI information of the UE. The new MME sends a context request message to an old (old) MME to which the UE belongs, and requests to acquire context information of the UE; the old MME sends a context reply message to the new MME, and sends MM context information of the UE, EPS bearer context information of the UE, and the like to the new MME. If the new MME does not have subscription data information of the UE, the new MME sends a location update request message to an MVNO HSS, where the message carries the IMSI information of the UE. The MVNO HSS sends a location update acknowledgment message to the new MME, and sends the subscription data information of the UE to the new MME.

Step 702: The new MME determines, according to an IMSI of the UE, an MVNO to which the UE belongs.

Step 703: The new MME sends an authorization request message to an IWF/MNO HSS, and sends identification information of the MVNO corresponding to the UE, and the IMSI of the UE to the IWF/MNO HSS.

Step 704: When determining that online attached users of the MVNO does not include the UE, the IWF/MNO HSS backs up the IMSI of the UE, and increases, by one, a total quantity of online attached users of the MVNO identified by an MVNO ID.

Step 705: The IWF/MNO HSS determines whether the total quantity of online attached users of the MVNO exceeds a threshold.

The threshold is a total user quantity negotiated by the MVNO and an MNO. Step 706 is performed if the threshold is not exceeded. Step 707 is performed if the threshold is exceeded.

Step 706: The IWF/MNO HSS sends an authorization response message to the new MME.

If the threshold is not exceeded, the IWF/MNO HSS sends the new MME an authorization response message indicating an authorization success; or if total quantity authorization performed by the IWF/MNO HSS fails, the IWF/MNO HSS sends the new MME an authorization response message indicating an authorization failure.

The foregoing steps 702 to 706 are similar to steps 601 to 606 in the foregoing embodiment; details are not described herein.

In addition, the old MME exchanges information with an IWF/MNO HSS of a network to which the old MME belongs. The IWF/MNO HSS deletes the IMSI of the UE, decreases, by one, the total quantity of online attached users of the MVNO identified by the MVNO ID, and updates a total quantity of online attached users of the MVNO of the network to which the old MME belongs.

If the tracking area update request of the UE is refused, the UE may enable a timer, and initiate a tracking area update request again after the timer times out.

In this embodiment of the present invention, it is implemented that a quantity of online attached users of an MVNO is controlled in an Inter-PLMN TAU procedure, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

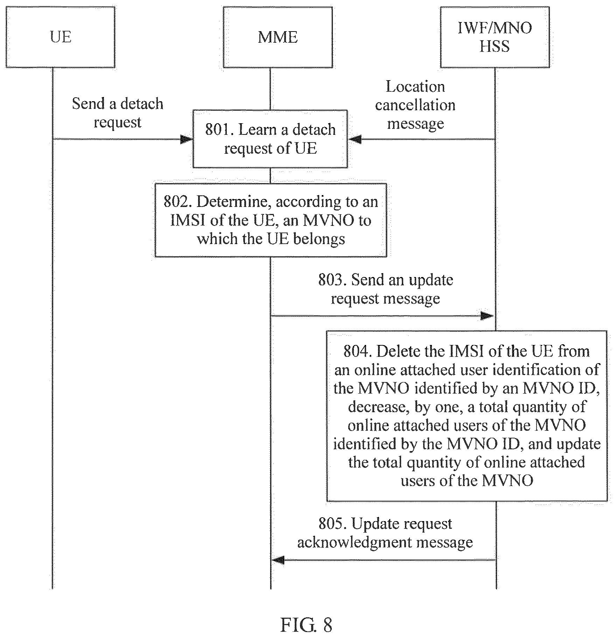

Referring to FIG. 8, FIG. 8 is a flowchart of a method for controlling a total quantity of online attached users in a Detach procedure according to an embodiment of the present invention.

The method may include:
Step 801: An MME learns a detach request of UE.

The detach request of the UE may be an explicit detach request initiated by the UE to the MME, or may be an implicit detach request of the UE initiated by the MME, or may be an implicit detach request of the UE initiated by an MVNO HSS, which may be specifically a location cancellation message sent by the MVNO HSS and received by the MME.

After learning the detach request of the UE, the MME performs step 802. The foregoing detach request includes an IMSI of the UE.

Step 802: The MME determines, according to an IMSI of the UE, an MVNO to which the UE belongs.

This step is similar to the foregoing step 602; details are not described herein.

Step 803: The MME sends an update request message to an IWF/MNO HSS, and sends identification information of the MVNO corresponding to the UE and the IMSI of the UE to the IWF/MNO HSS.

Step 804: The IWF/MNO HSS deletes the IMSI of the UE from online attached users identification of an MVNO identified by an MVNO ID, decreases, by one, a total quantity of online attached users of the MVNO identified by the MVNO ID, and updates the total quantity of online attached users of the MVNO.

Step 805: The IWF/MNO HSS returns an update request acknowledgment message to the MME.

The MME returns a detach accept message of the UE, and executes a related detach procedure.

In this embodiment of the present invention, it is implemented that a quantity of online attached users of an MVNO is controlled in a detach procedure, so that an MNO can accurately count the quantity of online attached users of the MVNO in time.

The foregoing embodiment of the present invention may be applied to a scenario in which a core network is mainly shared for the MVNO part, where an HSS is deployed by the MVNO, and another core network device shares a network device of an MNO.

The foregoing describes the method embodiments of the present invention, and the following introduces devices for implementing the foregoing methods.

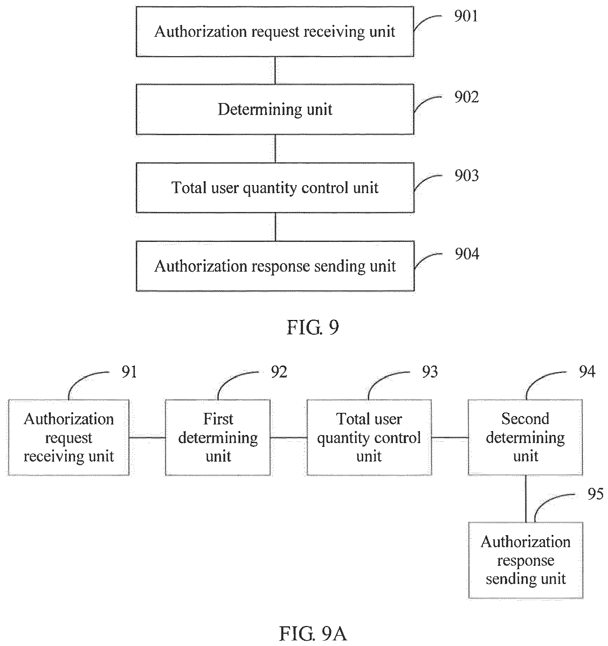

Referring to FIG. 9, FIG. 9 is a schematic structural diagram of a total user quantity control device according to an embodiment of the present invention.

The total user quantity control device includes:
an authorization request receiving unit 901, configured to receive an authorization request sent by a network side device, where the authorization request includes at least identification information of first UE and identification information of a first MVNO, and the identification information of the first MVNO is the first MVNO that is corresponding to the first UE and that is determined by the network side device after receiving an attach request of the first UE or a tracking area update request of the first UE;
a determining unit 902, configured to determine, according to the identification information of the first MVNO and the identification information of the first UE, whether online attached users of the first MVNO includes the first UE; and determine whether a total quantity of online attached users of the first MVNO is less than a threshold;
a total user quantity control unit 903, configured to: when the determining unit 902 determines that the online attached users of the first MVNO does not include the first UE, and the total quantity of online attached users of the first MVNO is less than the threshold, increase the total quantity of online attached users of the first MVNO, and add the first UE to the online attached users of the first MVNO; and
an authorization response sending unit 904, configured to: when the determining unit 902 determines that the online attached users of the first MVNO does not include the first UE, and the total quantity of online attached users of the first MVNO is less than the threshold, feed back authorization success information to the network side device.

The threshold is a total user quantity negotiated by the first MVNO and a mobile operator MNO.

In this embodiment of the present invention, a total user quantity control device controls a quantity of online attached users of an MVNO, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

In another embodiment, the authorization response sending unit 904 is further configured to: when the determining unit 902 determines that the online attached users of the first MVNO does not include the first UE, and the total quantity of online attached users of the first MVNO exceeds the threshold, feed back authorization failure information to the network side device.

Referring to FIG. 9A, FIG. 9A is another schematic structural diagram of a total user quantity control device according to an embodiment of the present invention. The apparatus includes: an authorization request receiving unit 91, a first determining unit 92, a total user quantity control unit 93, a second determining unit 94, and an authorization response sending unit 95.

The authorization request receiving unit 91 is configured to receive an authorization request sent by a network side device, where the authorization request includes at least identification information of first UE and identification information of a first MVNO.

The first determining unit 92 is configured to determine, according to the identification information of the first MVNO and the identification information of the first UE, whether online attached users of the first MVNO includes the first UE.

The total user quantity control unit 93 is configured to: when the first determining unit determines that the online attached users of the first MVNO does not include the first UE, increase a total quantity of online attached users of the first MVNO, and add the first UE to the online attached users of the first MVNO.

The second determining unit 94 is configured to determine whether a total quantity, of online attached users of the first MVNO, increased by the first user management unit is less than or equal to a threshold.

The authorization response sending unit 95 is configured to: when the second determining unit determines that the increased total quantity of online attached users of the first MVNO is less than or equal to the threshold, feed back authorization success information to the network side device.

Optionally, in another embodiment, the authorization response sending unit is further configured to: when the second determining unit determines that the total quantity of online attached users of the first MVNO exceeds the threshold, feed back authorization failure information to the network side device.

For an implementation process of functions of each unit in the device, refer to an implementation process of a corresponding step in the foregoing method; details are not described herein.

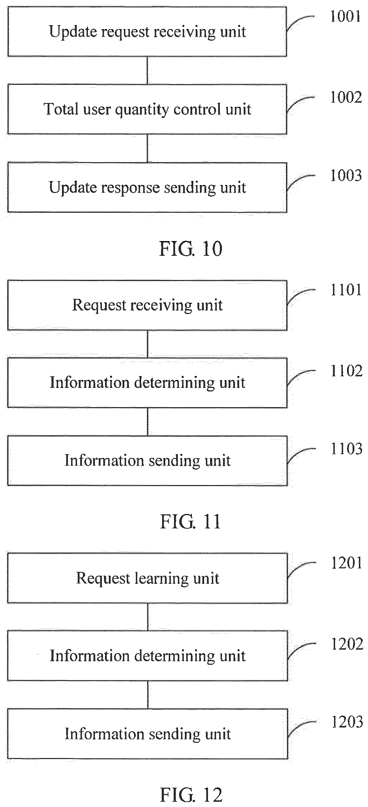

Referring to FIG. 10, FIG. 10 is another schematic structural diagram of a total user quantity control device according to an embodiment of the present invention.

The total user quantity control device includes:
an update request receiving unit 1001, configured to receive an update request sent by a network side device, where the update request includes at least identification information of the first UE and identification information of a first MVNO, and the identification information of the first MVNO is the first MVNO that is corresponding to the first UE and that is determined by the network side device after learning a detach request of the first UE;
a total user quantity control unit 1002, configured to decrease a total quantity of online attached users of the first MVNO according to the identification information of the first MVNO in the update request, and delete the first UE from online attached users of the first MVNO according to the identification information of the first UE; and
an update response sending unit 1003, configured to feed back the update request acknowledgment information to the network side device.

In this embodiment of the present invention, a total user quantity control device controls a quantity of online attached users of an MVNO, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

Referring to FIG. 11, FIG. 11 is another schematic structural diagram of a network side device according to an embodiment of the present invention.

The network side device may include:
a request receiving unit 1101, configured to receive an attach request of first UE or a tracking area update request of first UE;
an information determining unit 1102, configured to determine a first MVNO corresponding to the first UE; and
an information sending unit 1103, configured to send an authorization request to a total user quantity control device, where the authorization request includes at least identification information of the first UE and identification information of the first MVNO, so that the total user quantity control device controls a total user quantity according to the identification information of the first MVNO and the identification information of the first UE.

That the total user quantity control device controls a total user quantity according to the identification information of the first MVNO and the identification information of the first UE is specifically:
when online attached users of the first MVNO does not include the first UE, increasing a total quantity of online attached users of the first MVNO, and adding the first UE to the online attached users of the first MVNO; and when the total quantity of online attached users of the first MVNO is less than or equal to a threshold, feeding back authorization success information to the network side device, where the threshold is a total user quantity negotiated by the first MVNO and an MNO.

In this embodiment of the present invention, a network side device sends, to a total user quantity control device, identification information of UE and identification information of an MVNO corresponding to the UE, so that the total user quantity control device can control a quantity of online attached users of the MVNO; and an MNO can accurately count the quantity of online attached users of the MVNO in time, and effectively control the total quantity of online attached users of the MVNO, so as to prevent the quantity of online attached users of the MVNO from exceeding a total user quantity set by the MNO.

In another embodiment, the information determining unit 1102 is specifically configured to search a correspondence between UE identification information and MVNO identification information, to determine the identification information of the first MVNO corresponding to the identification information of the first UE.

Referring to FIG. 12, FIG. 12 is a schematic structural diagram of another network side device according to an embodiment of the present invention.

The network side device may include:
a request learning unit 1201, configured to learn a detach request of first UE;
an information determining unit 1202, configured to determine a first MVNO corresponding to the first UE; and
an information sending unit 1203, configured to send an update request to a total user quantity control device, where the update request includes at least identification information of the first UE and identification information of the first MVNO, so that the total user quantity control device decreases a total quantity of online attached users of the first MVNO according to the identification information of the first MVNO, and deletes the first UE from online attached users of the first MVNO according to the identification information of the first UE; and feeds back update request acknowledgment information to the network side device.

In this embodiment of the present invention, a network side device sends, to a total user quantity control device, identification information of UE and identification information of an MVNO corresponding to the UE, so that the total user quantity control device can control a quantity of online attached users of the MVNO; and an MNO can accurately count the quantity of online attached users of the MVNO in time, and effectively control the total quantity of online attached users of the MVNO, so as to prevent the quantity of online attached users of the MVNO from exceeding a total user quantity set by the MNO.

In another embodiment, the request learning unit 1201 is specifically configured to receive the detach request sent by the first UE; or receive the detach request of the first UE sent by an MVNO HSS; or initiate the detach request of the first UE.

The information determining unit 1202 is specifically configured to search a correspondence between UE identification information and MVNO identification information, to determine the identification information of the first MVNO corresponding to the identification information of the first UE.

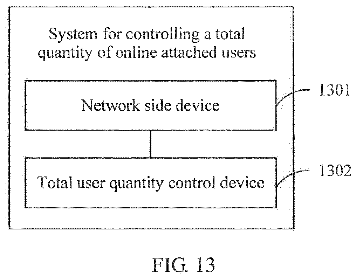

Referring to FIG. 13, FIG. 13 is another schematic structural diagram of a system for controlling a total quantity of online attached users according to an embodiment of the present invention.

The system includes a network side device 1301 and a total user quantity control device 1302.

The network side device 1301 is configured to receive an attach request of first UE or a tracking area update request of first UE; determine a first MVNO corresponding to the first UE; and send an authorization request to the total user quantity control device 1302, where the authorization request includes at least identification information of the first UE and identification information of the first MVNO.

The total user quantity control device 1302 is configured to receive the authorization request sent by the network side device 1301; determine, according to the identification information of the first MVNO and the identification information of the first UE, whether online attached users of the first MVNO includes the first UE; when the online attached users of the first MVNO does not include the first UE, increase a total quantity of online attached users of the first MVNO, and add the first UE to the online attached users of the first MVNO; and when an increased total quantity of online attached users of the first MVNO is less than or equal to a threshold, feed back authorization success information to the network side device, where the threshold is a total user quantity negotiated by the first MVNO and a mobile operator MNO; or
the total user quantity control device 1302 is configured to receive the authorization request sent by the network side device; determine, according to the identification information of the first MVNO and the identification information of the first UE, whether online attached users of the first MVNO includes the first UE; determine whether a total quantity of online attached users of the first MVNO is less than a threshold; and when the online attached users of the first MVNO does not include the first UE, and the total quantity of online attached users of the first MVNO is less than the threshold, increase the total quantity of online attached users of the first MVNO, add the first UE to the online attached users of the first MVNO, and feed back authorization success information to the network side device.

In this embodiment of the present invention, a total user quantity control device controls a quantity of online attached users of an MVNO, so that an MNO can accurately count the quantity of online attached users of the MVNO in time, and effectively control the total quantity of online attached users of the MVNO, so as to prevent the quantity of online attached users of the MVNO from exceeding a total user quantity set by the MNO.

An embodiment of the present invention further provides another system for controlling a total quantity of online attached users, where the system includes a network side device and a total user quantity control device.

The network side device is configured to learn a detach request of first UE; determine a first MVNO corresponding to the first UE; and send an update request to the total user quantity control device, where the update request includes at least identification information of the first UE and identification information of the first MVNO.

The total user quantity control device is configured to receive the update request sent by the network side device; decrease a total quantity of online attached users of the first MVNO according to the identification information of the first MVNO in the update request, and delete the first UE from online attached users of the first MVNO according to the identification information of the first UE; and feed back update request acknowledgment information to the network side device.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for controlling a total quantity of online attached users, wherein the method comprises:
receiving, by a total user quantity control device, an authorization request sent by a network side device, wherein the authorization request comprises at least identification information of first user equipment UE and identification information of a first virtual network operator MVNO;
determining, by the total user quantity control device according to the identification information of the first MVNO and the identification information of the first UE, whether online attached users of the first MVNO comprises the first UE;
when the online attached users of the first MVNO does not comprise the first UE, and a total quantity of online attached users of the first MVNO is less than a threshold, increasing, by the total user quantity control device, the total quantity of online attached users of the first MVNO, and adding the first UE to the online attached users of the first MVNO; and
feeding back, by the total user quantity control device, authorization success information to the network side device.

2. The method according to claim 1, further comprising:
when the online attached users of the first MVNO does not comprise the first UE, and the total quantity of online attached users of the first MVNO exceeds the threshold, feeding back, by the total user quantity control device, authorization failure information to the network side device.

3. A method for controlling a total quantity of online attached users, wherein the method comprises:
receiving, by a total user quantity control device, an authorization request sent by a network side device, wherein the authorization request comprises at least identification information of first user equipment UE and identification information of a first virtual network operator MVNO;
determining, by the total user quantity control device according to the identification information of the first MVNO and the identification information of the first UE, whether online attached users of the first MVNO comprises the first UE;
when the online attached users of the first MVNO does not comprise the first UE, increasing, by the total user quantity control device, a total quantity of online attached users of the first MVNO;
when an increased total quantity of online attached users of the first MVNO is less than or equal to a threshold, adding, by the total user quantity control device, the first UE to the online attached users of the first MVNO; and
feeding back, by the total user quantity control device, authorization success information to the network side device.

4. The method according to claim 3, further comprising:
when the online attached users of the first MVNO does not comprise the first UE, and the increased total quantity of online attached users of the first MVNO exceeds the threshold, feeding back, by the total user quantity control device, authorization failure information to the network side device.

5. A method for controlling a total quantity of online attached users, wherein the method comprises:
receiving, by a total user quantity control device, an update request sent by a network side device, wherein the update request comprises at least identification information of first UE and identification information of a first MVNO;
decreasing, by the total user quantity control device, a total quantity of online attached users of the first MVNO according to the identification information of the first MVNO in the update request, and deleting the first UE from online attached users of the first MVNO according to the identification information of the first UE; and
feeding back, by the total user quantity control device, update request acknowledgment information to the network side device.

6. A method for controlling a total quantity of online attached users, wherein the method comprises:
receiving, by a network side device, an attach request of first UE or a tracking area update request of first UE;
determining, by the network side device, a first MVNO corresponding to the first UE; and
sending, by the network side device, an authorization request to a total user quantity control device, wherein the authorization request comprises at least identification information of the first UE and identification information of the first MVNO, so that the total user quantity control device controls a total user quantity according to the identification information of the first MVNO and the identification information of the first UE.

7. The method according to claim 6, wherein the determining, by the network side device, a first MVNO corresponding to the first UE comprises:
searching, by the network side device, a correspondence between UE identification information and MVNO identification information to determine the identification information of the first MVNO corresponding to the identification information of the first UE.

8. A method for controlling a total quantity of online attached users, wherein the method comprises:
learning, by a network side device, a detach request of first UE;
determining, by the network side device, a first MVNO corresponding to the first UE; and
sending, by the network side device, an update request to a total user quantity control device, wherein the update request comprises at least identification information of the first UE and identification information of the first MVNO, so that the total user quantity control device decreases a total quantity of online attached users of the first MVNO according to the identification information of the first MVNO, and deletes the first UE from online attached users of the first MVNO according to the identification information of the first UE; and feeds back update request acknowledgment information to the network side device.

9. The method according to claim 8, wherein the learning, by a network side device, a detach request of first UE comprises:
receiving, by the network side device, the detach request sent by the first UE; or
receiving, by the network side device, the detach request of the first UE sent by an MVNO home subscriber server HSS; or
initiating, by the network side device, the detach request of the first UE.

10. The method according to claim 8 or 9, wherein the determining, by the network side device, a first MVNO corresponding to the first UE comprises:
searching, by the network side device, a correspondence between UE identification information and MVNO identification information, to determine the identification information of the first MVNO corresponding to the identification information of the first UE.

11. A total user quantity control device, comprising:
an authorization request receiving unit, configured to receive an authorization request sent by a network side device, wherein the authorization request comprises at least identification information of first UE and identification information of a first MVNO;
a determining unit, configured to determine, according to the identification information of the first MVNO and the identification information of the first UE, whether online attached users of the first MVNO comprises the first UE; and determine whether a total quantity of online attached users of the first MVNO is less than a threshold;
a total user quantity control unit, configured to: when the determining unit determines that the online attached users of the first MVNO does not comprise the first UE, and the total quantity of online attached users of the first MVNO is less than the threshold, increase the total quantity of online attached users of the first MVNO, and add the first UE to the online attached users of the first MVNO; and
an authorization response sending unit, configured to: when the determining unit determines that the online attached users of the first MVNO does not comprise the first UE, and the total quantity of online attached users of the first MVNO is less than the threshold, feed back authorization success information to the network side device.

12. The device according to claim 11, wherein
the authorization response sending unit is further configured to: when the determining unit determines that the online attached users of the first MVNO does not comprise the first UE, and the total quantity of online attached users of the first MVNO exceeds the threshold, feed back authorization failure information to the network side device.

13. A total user quantity control device, comprising:
an authorization request receiving unit, configured to receive an authorization request sent by a network side device, wherein the authorization request comprises at least identification information of first UE and identification information of a first MVNO;
a first determining unit, configured to determine, according to the identification information of the first MVNO and the identification information of the first UE, whether online attached users of the first MVNO comprises the first UE;
a total user quantity control unit, configured to: when the first determining unit determines that the online attached users of the first MVNO does not comprise the first UE, increase a total quantity of online attached users of the first MVNO, and add the first UE to the online attached users of the first MVNO;
a second determining unit, configured to determine whether a total quantity, of online attached users of the first MVNO, increased by the total user quantity control unit is less than or equal to a threshold; and
an authorization response sending unit, configured to: when the second determining unit determines that the increased total quantity of online attached users of the first MVNO is less than or equal to the threshold, feed back authorization success information to the network side device.

14. The device according to claim 13, wherein
the authorization response sending unit is further configured to: when the second determining unit determines that the total quantity of online attached users of the first MVNO exceeds the threshold, feed back authorization failure information to the network side device.

15. A total user quantity control device, wherein the device comprises:
an update request receiving unit, configured to receive an update request sent by a network side device, wherein the update request comprises at least identification information of the first UE and identification information of a first MVNO;
a total user quantity control unit, configured to decrease a total quantity of online attached users of the first MVNO according to the identification information of the first MVNO in the update request, and delete the first UE from online attached users of the first MVNO according to the identification information of the first UE; and
an update response sending unit, configured to feed back the update request acknowledgment information to the network side device.

16. A network side device, wherein the device comprises:
a request receiving unit, configured to receive an attach request of first UE or a tracking area update request of first UE;
an information determining unit, configured to determine a first MVNO corresponding to the first UE; and
an information sending unit, configured to send an authorization request to a total user quantity control device, wherein the authorization request comprises at least identification information of the first UE and identification information of the first MVNO, so that the total user quantity control device controls a total user quantity according to the identification information of the first MVNO and the identification information of the first UE.

17. The network side device according to claim 16, wherein
the information determining unit is specifically configured to search a correspondence between UE identification information and MVNO identification information to determine the identification information of the first MVNO corresponding to the identification information of the first UE.

18. A network side device, wherein the device comprises:
a request learning unit, configured to learn a detach request of first UE;
an information determining unit, configured to determine a first MVNO corresponding to the first UE; and
an information sending unit, configured to send an update request to a total user quantity control device, wherein the update request comprises at least identification information of the first UE and identification information of the first MVNO, so that the total user quantity control device decreases a total quantity of online attached users of the first MVNO according to the identification information of the first MVNO, and deletes the first UE from online attached users of the first MVNO according to the identification information of the first UE; and feeds back update request acknowledgment information to the network side device.

19. The network side device according to claim 18, wherein
the request learning unit is specifically configured to receive the detach request sent by the first UE; or receive the detach request of the first UE sent by an MVNO HSS; or initiate the detach request of the first UE.

20. The network side device according to claim 18 or 19, wherein
the information determining unit is specifically configured to search a correspondence between UE identification information and MVNO identification information, to determine the identification information of the first MVNO corresponding to the identification information of the first UE.

21. A system for controlling a total quantity of online attached users, comprising a network side device and a total user quantity control device, wherein
the network side device is configured to receive an attach request of first UE or a tracking area update request of first UE; determine a first MVNO corresponding to the first UE; and send an authorization request to the total user quantity control device, wherein the authorization request comprises at least identification information of the first UE and identification information of the first MVNO; and
the total user quantity control device is configured to receive the authorization request sent by the network side device; determine, according to the identification information of the first MVNO and the identification information of the first UE, whether online attached users of the first MVNO comprises the first UE; when the online attached users of the first MVNO does not comprise the first UE, increase a total quantity of online attached users of the first MVNO, and add the first UE to the online attached users of the first MVNO; and when an increased total quantity of online attached users of the first MVNO is less than or equal to a threshold, feed back authorization success information to the network side device; or
configured to receive the authorization request sent by the network side device; determine, according to the identification information of the first MVNO and the identification information of the first UE, whether online attached users of the first MVNO comprises the first UE; determine whether a total quantity of online attached users of the first MVNO is less than a threshold; and when the online attached users of the first MVNO does not comprise the first UE, and the total quantity of online attached users of the first MVNO is less than the threshold, increase the total quantity of online attached users of the first MVNO, add the first UE to the online attached users of the first MVNO, and feed back authorization success information to the network side device.

22. A system for controlling a total quantity of online attached users, comprising a network side device and a total user quantity control device, wherein
the network side device is configured to learn a detach request of first UE; determine a first MVNO corresponding to the first UE; and send an update request to the total user quantity control device, wherein the update request comprises at least identification information of the first UE and identification information of the first MVNO; and
the total user quantity control device is configured to receive the update request sent by the network side device; decrease a total quantity of online attached users of the first MVNO according to the identification information of the first MVNO in the update request, and delete the first UE from online attached users of the first MVNO according to the identification information of the first UE; and feed back update request acknowledgment information to the network side device.
